# EUROPÄISCHE PATENTSCHRIFT

(11) **EP 3 180 212 B1**
(45) Veröffentlichungstag und Bekanntmachung des Hinweises auf die Patenterteilung: **21.11.2018**
(21) Anmeldenummer: 15749720.7
(22) Anmeldetag: 31.07.2015
(51) Int. Cl.: B60R 11/04

(54) **TRÄGERVORRICHTUNG ZUM BEFESTIGEN AN EINER SCHEIBE EINES KRAFTWAGENS**
SUPPORT DEVICE FOR ATTACHMENT TO A WINDOW OF A MOTOR VEHICLE
DISPOSITIF DE SUPPORT POUR LA FIXATION À UNE FENÊTRE D'UN VÉHICULE AUTOMOBILE

(30) Priorität: 12.08.2014 DE 102014012001
(43) Veröffentlichungstag der Anmeldung: 21.06.2017
(73) Patentinhaber: Daimler AG, 70327 Stuttgart (DE)
(72) Erfinder: KRUG, Martin, 76189 Karlsruhe (DE); RITSCHEL, Ulf, 75378 Bad Liebenzell (DE); SCHMIDT, Axel, 70794 Filderstadt (DE)
(74) Vertreter: JENSEN & SON
(86) Internationale Anmeldenummer: PCT/EP2015/001583
(87) Internationale Veröffentlichungsnummer: WO 2016/023621

(56) Entgegenhaltungen:
- WO-A1-2008/014870
- DE-A1-102011 121 003
- DE-A1-102012 101 781

## Beschreibung

Die Erfindung betrifft eine Trägervorrichtung zum Befestigen an einer Scheibe eines Kraftwagens. Die Trägervorrichtung umfasst eine an der Scheibe festlegbare Grundplatte. Eine Traganordnung der Trägervorrichtung ist zum Halten eines Gehäuses wenigstens einer Kamera ausgebildet ist. Des Weiteren betrifft die Erfindung eine Scheibe eines Kraftwagens, an welcher eine solche Trägervorrichtung befestigt ist.

Die DE 10 2008 050 320 A1 beschreibt eine Trägervorrichtung, welche an einer Frontscheibe des Kraftwagens positioniert ist. Eine Grundplatte der Trägervorrichtung wird hierfür mittels eines Klebstoffs an der Scheibe festgelegt. Eine Traganordnung zum Festlegen eines Gehäuses einer Kamera an der Grundplatte umfasst einen einstückig mit der Grundplatte ausgebildeten Rahmen. An dem Rahmen sind Federelemente in Form eines B-förmigen Metallbügels vorgesehen, welche bei in den Rahmen eingesetztem Kameragehäuse das Kameragehäuse gegen eine gegenüberliegende Wand des Rahmens drücken. Weiterhin sind gewölbte Blattfedern auf der Grundplatte vorgesehen, die das Kameragehäuse, in einer von der Scheibe weg weisenden Richtung, mit stabförmigen Komponenten, die vom Kameragehäuse abragen, in entsprechende Halterungen einspannen.

Die Montage der besagten Federelemente auf der Grundplatte und an ihrem Rahmen geht mit einem gewissen Aufwand einher. Zudem kann es sich als schwierig erweisen, mittels der Federelemente eine für die Ausrichtung der Kamera erforderliche Positionierung des Kameragehäuses relativ zu der Grundplatte, und damit auch relativ zu der Scheibe des Kraftfahrzeugs, auf der die Grundplatte zu platzieren ist, zu erreichen.

Die DE 10 2011 121 003 A1 zeigt eine alternative Trägervorrichtung zum Befestigen an einer Windschutzscheibe, bei der das oben erwähnte B-förmige Federelement im Rahmen der Grundplatte durch ein V-förmiges Federelement ersetzt ist. Auch diese Trägervorrichtung weist die gewölbten Blattfedern und zugehörige Halterungen zum Einspannen des Gehäuses einer Kamera in einer von der Windschutzscheibe weg weisenden Richtung auf.

DE 10 2012 101 781 A1 und PCT/JP/2013/055631 (= WO2013/141000 A1) zeigen Trägervorrichtungen, bei denen die Kamera mittels dreier am Kameragehäuse befindlichen Zapfen oder stabförmigen Komponenten an drei Punkten auf der Trägervorrichtung befestigt wird.

Die DE 10 2011 121 003 A1 offenbart eine Trägervorrichtung nach dem Oberbegriff von Anspruch 1.

Aufgabe der vorliegenden Erfindung ist es, eine Trägervorrichtung der eingangs genannten Art sowie eine Scheibe eine Kraftwagen mit einer solchen Trägervorrichtung zu schaffen, welche eine verbesserte Positionierung der wenigstens einen Kamera relativ zu der Grundplatte, und damit zur Scheibe, auf welcher die Grundplatte zu positionieren und zu befestigen ist, ermöglicht.

Diese Aufgabe wird durch eine Trägervorrichtung mit den Merkmalen des Patentanspruchs 1 und durch eine Scheibe eines Kraftwagens mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Die erfindungsgemäße Trägervorrichtung mit einer an einer Scheibe eines Kraftwagens festlegbaren Grundplatte, auf welcher eine Traganordnung zum Halten eines Gehäuses wenigstens einer Kamera ausgebildet ist, zeichnet sich dadurch aus, dass die Traganordnung zumindest ein Halteelement mit wenigstens einem Federelement umfasst, welches dazu ausgebildet ist, eine an dem Gehäuse angeordnete und über eine Wandung des Gehäuses überstehende stabförmige Komponente direkt mit einem in Richtung zur Grundplatte hin wirkenden Druck zu beaufschlagen. Mit anderen Worten wird in Bezug auf eine Platzierung der Trägervorrichtung 10 an der Scheibe eines Kraftwagens durch das zumindest eine Halteelement das Gehäuse der Kamera in Richtung der Scheibe gedrückt. Damit kann erfindungsgemäß ein auf der Scheibe vorzusehender Durchsichtbereich für die wenigstens eine Kamera vergleichsweise klein ausgebildet werden, weil durch jeden Grad der Annährung der Kamera an die Scheibe die Größe eines Sichtkegels oder Erfassungsbereichs der Kamera kleiner wird: Ein um einen Millimeter verringerter Abstand der Kamera von der Scheibe führt zu einem fünf Millimeter verkleinerten Durchmesser des Sichtkegels der Kamera auf der Höhe der Scheibe, durch welche hindurch die wenigstens eine Kamera die Umgebung erfasst.

In einem auf der Scheibe vorzusehenden Schwarzdruck, der zur optischen Kaschierung der Trägervorrichtung dient, kann daher die für den Sichtkegel der benötigte Aussparung kleiner ausfallen. Auch kann bei vergleichsweise nah an der Grundplatte angeordnetem Kameragehäuse eine Kappe, welche die Kamera zum Fahrgastraum hin abdeckt, entsprechend kleiner dimensioniert werden.

Des Weiteren werden mit dieser Art der Befestigung keine direkten Kräfte in das Gehäuse der Kamera eingeleitet, sondern der von den Halteelementen mit den Federn ausgeübte Druck wirkt lediglich auf die über die Wandungen des Gehäuses der Kamera überstehenden stabförmigen Komponenten. Die Trägervorrichtung ermöglicht somit eine verbesserte Positionierung der Kamera.

Bevorzugt umfasst die Traganordnung drei Halteelemente, welche an jeweils unterschiedlichen Seiten eines für das Gehäuse der Kamera vorgesehenen Aufnahmebereichs der Trägervorrichtung angeordnet sind. Eine solche Fixierung des Kameragehäuses an drei einem Aufnahmebereich zugeordneten und durch die Halteelemente bereitgestellten Befestigungspunkten sorgt für eine besonders gute Lagedefinition des montierten Kameragehäuses. Eine Bewegung des Kameragehäuses relativ zu der Grundplatte, also ein Wackeln, kann so besonders weitgehend vermieden werden. Dies ist insbesondere deswegen vorteilhaft, da zur Erfüllung der von der Kamera zu leistenden Aufgaben deren lagegesicherte, eindeutige und definierte Positionierung relativ zu der Grundplatte und damit relativ zu der Scheibe des Kraftwagens besonders wichtig ist.

Der für das Gehäuse der Kamera vorgesehene Aufnahmebereich kann insbesondere im Wesentlichen rechteckig sein, da auch das Gehäuse der Kamera eine im Wesentlichen rechteckige Grundfläche aufweisen kann.

Es können an der Grundplatte zwei unterschiedliche Aufnahmebereiche vorgesehen sein, wobei jeweils drei Halteelemente dem jeweiligen Aufnahmebereich zugeordnet sind. Hierbei können zwei der beiden Halteelemente demselben Aufnahmebereich zugeordnet sein. Dadurch ist es möglich, wahlweise ein Gehäuse mit zwei Kameras, also eine sogenannte Stereokamera, oder ein Gehäuse für lediglich eine Kamera, also eine sogenannte Monokamera, an der Trägervorrichtung mittels jeweils dreier Halteelemente zu befestigen. Dennoch braucht die Trägervorrichtung insgesamt nur vier Halteelemente aufzuweisen, damit dem jeweiligen Aufnahmebereich drei Halteelemente zugeordnet sind. Ein Halteelement, welches bei Anordnung der Stereokamera an der Trägervorrichtung dem für die Monokamera vorgesehenen Aufnahmebereich zugeordnet ist, bleibt dann ungenutzt. Ebenso bleibt bei Anordnung der Monokamera an der Trägervorrichtung im für die Monokamera vorgesehenen Aufnahmebereich dasjenige Halteelement ungenutzt, welches dem Aufnahmebereich für die Stereokamera zugeordnet ist.

Durch das Vorsehen der drei Halteelemente je Aufnahmebereich für das Gehäuse der wenigstens einen Kamera lässt sich ein Winkel, den die wenigstens eine Kamera zur Grundplatte und somit zur Scheibe aufweisen soll, mit besonders großer Genauigkeit reproduzieren.

Zwei der drei Halteelemente können an Seiten des Aufnahmebereichs angeordnet sein, welche in Bezug auf eine Platzierung der Trägervorrichtung 10 an der Scheibe des Kraftwagens zumindest im Wesentlichen parallel zu Längsseiten des Kraftwagens verlaufen. Durch Festlegung von zwei stabförmigen Komponenten an diesen beiden Halteelementen lässt sich eine Orientierung des Kameragehäuses in Bezug auf die Fahrzeuglängsrichtung fest vorgeben. Wenn die beiden an den Seiten des Aufnahmebereichs angeordneten Halteelemente so angeordnet sind, dass die an diesen festgelegten stabförmigen Komponenten miteinander fluchten, so entsteht vorteilhaft eine Drehachse für das Gehäuse. Durch Verschwenken des Kameragehäuses um diese Drehachse lässt sich dann besonders einfach und sicher ein Winkel des Kameragehäuses relativ zur Grundplatte einstellen, indem eine dritte stabförmige Komponente an einem dritten der drei Halteelemente festgelegt wird.

Bevorzugt weisen die beiden an den Seiten des Aufnahmebereichs angeordneten Halteelemente jeweils einen Einführbereich auf, welcher zu jeweiligen Rastmulden für die jeweilige stabförmige Komponente führt. Durch den Einführbereich ist eine zumindest im Wesentlichen parallel zur Grundplatte verlaufende Montagerichtung für das Gehäuse der wenigstens einen Kamera vorgegeben. Eine solche Montagerichtung ist vorteilhaft, da so beim Montieren des Kameragehäuses kein zu hoher Druck auf die Scheibe aufgebracht zu werden braucht. Eine derart verbesserte Einbau-Kinematik des Kameragehäuses führt dazu, dass parallel zur Scheibe bei der Montage größere Kräfte aufgebracht werden können, ohne dass die Gefahr einer Beschädigung der Scheibe besteht. Eine besonders einfache Montage ergibt sich, wenn bei geneigter Scheibe die Montagerichtung mit der Neigung der Scheiben zusammenfällt. So kann das Gehäuse beispielsweise im Wesentlichen von oben nach unten eingebaut werden, wenn es parallel zur Grundplatte verschoben wird.

Die Rastmulden sorgen für ein formschlüssiges Festhalten der stabförmigen Komponenten und somit für eine formschlüssige Befestigung des Kameragehäuses an der Trägervorrichtung bei einem Aufprall. Die Rastmulden verhindern nämlich ein Sich-Bewegen des Gehäuses der wenigstens einen Kamera in die Fahrzeuglängsrichtung, sobald die stabförmigen Komponenten in den Rastmulden der beiden Halteelemente aufgenommen sind.

Als weiter vorteilhaft hat es sich gezeigt, wenn die Montagerichtung, die in Bezug auf eine Platzierung der Trägervorrichtung 10 an der Scheibe des Kraftwagens in eine Vorwärtsfahrtrichtung des Kraftwagens weist, wobei die Einführbereiche der beiden Halteelemente sich entgegen der Montagerichtung U-förmig oder V-förmig öffnend ausgebildet sind. Eine solche Ausbildung der Einführbereiche ist beispielsweise bei einem Frontalaufprall des Kraftwagens von Vorteil, da dann das Gehäuse der wenigstens einen Kamera in die Fahrzeuglängsrichtung sicher gehalten ist, in welche sich die Einführbereiche verjüngen.

Bevorzugt ist ein drittes der beiden Halteelemente an einer Seite des Aufnahmebereichs angeordnet, welche in Bezug auf eine Platzierung der Trägervorrichtung an der Scheibe des Kraftwagens einer Fahrzeugfront näher ist als einem Fahrzeugheck. Mit anderen Worten kann das dritte Halteelement an einer Frontseite des Aufnahmebereichs vorgesehen sein. Dann kann nämlich die dieser Frontseite gegenüberliegende Seite des Gehäuses der wenigstens einen Kamera für das Vorsehen von Anschlüssen oder dergleichen genutzt werden, ohne dass hier die stabförmige Komponente im Weg ist.

Als weiter vorteilhaft hat es sich gezeigt, wenn in einem Basisbereich des dritten Halteelements eine Einbuchtung oder Vertiefung ausgebildet ist, in welche eine in die Montagerichtung über eine Wandung des Gehäuses überstehende, stabförmige Komponente einführbar ist.

Durch das Einführen der stabförmigen Komponente in die Vertiefung lässt sich das Gehäuse der Kamera besonders einfach montieren. Dies gilt insbesondere, wenn die in die Montagerichtung über die Wandung des Gehäuses überstehende stabförmige Komponente länger ist, als die beiden an den Seiten des Kameragehäuses vorgesehenen stabförmigen Komponenten. Des Weiteren kann zum Erleichtern des Einführens der stabförmigen Komponente in die Vertiefung die stabförmige Komponente angeschrägt oder konisch zulaufend ausgebildet sein.

Dem gegenüber sind die in den beiden Rastmulden aufzunehmenden stabförmigen Komponenten bevorzugt rund und mit einer glatten Oberfläche ausgebildet, um einen möglichst leichten Einbau des Kameragehäuses sicherzustellen.

Als weiter vorteilhaft hat es sich gezeigt, wenn eine Höhe des dritten Halteelements in Abhängigkeit von einer Neigung der Scheibe des Kraftwagens und einem Erfassungsbereich der wenigstens einen Kamera eingestellt ist. So kann durch Verändern der Höhe des Halteelements sehr einfach die ansonsten unveränderte Trägervorrichtung in Baureihen des Kraftwagens eingesetzt werden, welche unterschiedliche Neigungen der Scheibe aufweisen. Dies ist insbesondere dann besonders einfach, wenn die Grundplatte und einstückig mit dieser ausgebildete Grundkörper der Halteelemente aus einem Kunststoff hergestellt sind, etwa beim Fertigen der Trägervorrichtung in einem Spritzgießverfahren. Dann braucht nämlich bei einem zum Herstellen der Grundplatte verwendeten Werkzeug lediglich ein Wechseleinsatz verwendet zu werden, mittels welchem sich die Höhe des dritten Halteelements vorgeben lässt. Zum Fertigen der Grundplatte braucht somit nicht das gesamte Werkzeug neu hergestellt zu werden. Vielmehr ist es ausreichend, das ansonsten unveränderte Werkzeug lediglich mit einem zur Formgebung des dritten Halteelements vorzusehenden Wechseleinsatz auszurüsten.

Zusätzlich oder alternativ können auf der ersten Seite der Grundplatte angeordnete Abstandshalter in ihrer Höhe in Abhängigkeit von einer Neigung der Scheibe eingestellt werden. Auch hier lassen sich beim Herstellen der Grundplatte aus einem Kunststoff Wechseleinsätze verwenden, welche zu unterschiedlichen Höhen der Abstandshalter je nach bei der Baureihe des Kraftwagens vorgesehener Neigung der Scheibe führen. So kann unabhängig von der bei der jeweiligen Baureihe des Kraftwagens vorhandenen Scheibenneigung ein gewünschter Winkel vorgegeben werden, unter welchem die wenigstens eine Kamera die Umgebung bezogen auf die Horizontale erfasst.

Bevorzugt ist das wenigstens eine Federelement des zumindesten einen Halteelements, welches dem Beaufschlagen der stabförmigen Komponente mit dem in Richtung zur Grundplatte hin wirkenden Druck dient, aus einem Metall gebildet. Metallische Federelemente sind besonders elastisch und robust. Insbesondere können als metallische Federelemente einfache Blattfedern zum Einsatz kommen, welche sortenrein, klein und kostengünstig herstellbar sind. Zudem können derartige Federelemente mit besonders geringem Aufwand bereits beim Herstellen der Grundplatte in jeweiligen Grundkörpern der Halteelemente angeordnet werden. Dadurch ergeben sich Vorteile im Hinblick auf die Produktion beim Ausrüsten des Kraftwagens mit der Trägervorrichtung und mit dem Gehäuse für die Kamera. Ein mechanisierter Einbau der Federelemente kann etwa über Rundtisch-Roboter oder andere automatisierte Techniken erfolgen.

Das Federelement weist vorteilhaft ein Sicherungselement auf, welches ein Sich-Lösen des Federelements von dem Grundkörper des Halteelements verhindert. Beispielsweise kann eine nach Art eines Hinterschnitts ausgebildete Lasche oder dergleichen vorgesehen sein, welche beim Verbringen des Federelements in seine Einbauposition zurückfedert und dann, nämlich im an dem Grundkörper des Halteelements angeordneten Zustand des Federelements mit dem Grundkörper in Anlage ist.

An der wenigstens einen Kamera kann ein Blendenelement vorgesehen werden, welches an der Grundplatte festlegbar ist. Ein solches Blendenelement, etwa in Form einer Streulichtblende, welches lösbar an der Grundplatte festlegbar ist, ermöglicht eine je nach Ausstattung der Trägervorrichtung mit einer oder zwei Kameras gewünschte Bestückung der Grundplatte mit dem jeweiligen Blendenelement. Das Festlegen des Blendenelements an der Grundplatte kann beispielsweise durch Einklipsen oder dergleichen erfolgen. Durch die lösbare Halterung des Blendenelements an der Grundplatte kann jeweils ein in der Gestalt an den jeweiligen Kameratyp angepasstes Blendenelement eingesetzt werden.

Des Weiteren ist es möglich, unterschiedliche Materialien und Oberflächen oder auch Lackierungen des Blendenelements vorzusehen, welche von denen der Grundplatte abweichen können. Das Blendenelement kann daher besonders gut an seinen jeweiligen Einsatzzweck angepasst und dennoch bereits an der Grundplatte lösbar befestigt zur Verfügung gestellt werden.

Ein solches, an der Grundplatte festlegbares Blendenelement kann eine Heizeinrichtung aufweisen. Dadurch ist es möglich, den Bereich der Scheibe mit Heizwärme zu beaufschlagen, welcher zum Sicherstellen einer Durchsicht der Kamera durch die Scheibe von Beschlag freizuhalten ist. Durch das Integrieren der Heizeinrichtung in das Blendenelement kann genau der Bereich der Scheibe mit Heizwärme beaufschlagt werden, in welchem sich ein Objektiv der Kamera befindet. Zudem braucht nicht in der Scheibe ein Heizdraht oder dergleichen vorgesehen zu werden, wenn ein Heizdraht oder dergleichen Heizeinrichtung in dem Blendenelement angeordnet ist. Dies verringert die je nach Ausstattung des Fahrzeugs mit einer oder zwei (oder gar keiner) Kamera vorzusehenden Varianten der Scheibe und ist daher besonders vorteilhaft.

Bei einem Defekt der Heizeinrichtung kann zudem besonders einfach das Blendenelement ausgetauscht werden. Auch ein Anschluss der Heizeinrichtung des Blendenelements an ein Bordnetz lässt sich besonders einfach bewerkstelligen, indem auf der Grundplatte eine Befestigungsmöglichkeit für eine entsprechende Verteileinrichtung vorgesehen ist, über welche Heizdrähte oder dergleichen mit von dem Bordnetz zur Verfügung gestellter elektrischer Energie beaufschlagt werden können.

Schließlich hat es sich als vorteilhaft gezeigt, wenn die Trägervorrichtung wenigstens ein aus der Grundplatte herausbrechbares Abdeck-Element umfasst, mit welchem sich eine für eine Kamera oder einen weiteren Sensor vorgesehene Ausnehmung in der Grundplatte verschließen lässt. Dann kann nämlich, wenn die Trägervorrichtung nicht mit der Kamera oder dem weiteren Sensor bestückt ist, das Abdeck-Element zum Verschließen der Ausnehmung an der Grundplatte belassen werden. Dadurch ist ein Schutz von an der Trägervorrichtung angeordneten Komponenten und - in der Einbauposition der Trägervorrichtung - der Scheibe vor Staub sichergestellt.

Des Weiteren kann eine prinzipiell zum Halten eines Gehäuses einer Stereokamera ausgebildete Trägervorrichtung zum Halten des Gehäuses einer Monokamera verwendet werden, und die für die zweite Kamera vorgesehene Ausnehmung bleibt durch das wenigstens eine Abdeck-Element verschlossen. Für ein prozesssicheres Herausbrechen des wenigstens einen Abdeck-Elements ist bevorzugt eine Sollbruchstelle vorgesehen.

Die erfindungsgemäße Scheibe eines Kraftwagens ist durch positionsgenaues Verkleben mit einer erfindungsgemäßen Trägervorrichtung bestückt. Durch eine positionsgenaue Platzierung der Traganordnung der Trägervorrichtung auf der Scheibe kann das Gehäuse der wenigstens einen Kamera daran derart befestigt werden, dass nach einem Einbau der Scheibe im Kraftwagen mittels der wenigstens einen Kamera eine Umgebung des Kraftwagens zumindest bereichsweise erfasst werden kann. Die Traganordnung ermöglicht hierbei eine einfache und aufwandsarme Festlegung des Gehäuses der wenigstens einen Kamera an der Grundplatte der Trägervorrichtung und zwar in einer Winkellage, wie sie für das Erfassen zumindest des Bereichs der Umgebung des Kraftwagens vorgesehen ist. Ein sicherer Halt des Gehäuses der wenigstens einen Kamera an der Grundplatte ist hierbei sichergestellt, wobei Relativbewegungen zwischen dem Gehäuse der Kamera und der Trägervorrichtung besonders weitgehend unterbunden sind. Dies sorgt dafür, dass eine gewünschte Ausrichtung einer optischen Achse der Kamera relativ zur Scheibe des Kraftwagens besonders genau eingehalten wird. Somit ist die Positionierung der Kamera auf der Scheibe mit allen Vorteilen der erfindungsgemäßen Trägervorrichtung verbessert.

Die für die erfindungsgemäße Trägervorrichtung beschriebenen Vorteile und bevorzugten Ausführungsformen gelten auch für die erfindungsgemäße Scheibe des Kraftwagens und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: in einer Draufsicht eine Trägervorrichtung zum Befestigen an einer Frontscheibe eines Kraftwagens, wobei an der Trägervorrichtung ein Gehäuse mit zwei Kameras gehalten ist;
- Fig. 2: in einer Draufsicht das Gehäuse der Kameras gemäß Fig. 1;
- Fig. 3: in einer Draufsicht die Trägervorrichtung gemäß Fig. 1, jedoch ohne das Kameragehäuse;
- Fig. 4: die Trägervorrichtung gemäß Fig. 1 in einer Ansicht auf eine der Scheibe des Kraftwagens zugewandte Seite einer Grundplatte der Trägervorrichtung;
- Fig. 5: in einer Perspektivansicht einen ersten, über eine Seitenwand des Gehäuses der Kameras gemäß Fig. 1 hervorstehenden Bolzen, welcher an der Trägervorrichtung festgelegt wird, um das Gehäuse der Kameras an der Trägervorrichtung zu befestigen;
- Fig. 6: in einer Perspektivansicht einen zweiten, über eine Seitenwand des Gehäuses der Kameras hervorstehenden Bolzen zum Befestigen des Gehäuses an der Trägervorrichtung;
- Fig. 7: in einer Perspektivansicht einen dritten der Befestigung des Gehäuses der Kameras an der Trägervorrichtung dienenden Bolzen, welcher in eine Montagerichtung über eine frontseitige Wand des Gehäuses der Kameras übersteht;
- Fig. 8: in einer Perspektivansicht einen an der Grundplatte der Trägervorrichtung vorgesehenen Grundkörper eines Halteelements zum Fixieren des ersten Bolzens,
- Fig. 9: in einer Perspektivansicht einen entsprechende Grundkörper eines weiteren, analog aufgebauten Halteelements zum Fixieren des zweiten Bolzens;
- Fig. 10: in einer Perspektivansicht einen entsprechende Grundkörper eines weiteren Halteelements zum Fixieren des dritten Bolzens;
- Fig. 11: in einer Perspektivansicht den an dem korrespondierenden Halteelement fixierten zweiten Bolzen;
- Fig. 12: in einer Schnittansicht entlang einer Linie XII-XII in Fig. 1 den am korrespondierenden Halteelement festgelegten ersten Bolzen;
- Fig. 13: in einer Schnittansicht das den zweiten Bolzen fixierende Halteelement, wobei zusätzlich eine Feder gezeigt ist, welche den zweiten Bolzen mit einem in Richtung der Scheibe wirkenden Druck beaufschlagt;
- Fig. 14: in einer Perspektivansicht den im korrespondierenden Halteelement aufgenommenen dritten Bolzen;
- Fig. 15: den an dem dritten Halteelement fixierten dritten Bolzen in einer Schnittansicht entlang einer Linie XV-XV in Fig. 1;
- Fig. 16: in einer Perspektivansicht die Trägervorrichtung gemäß Fig. 3;
- Fig. 17: eine Schnittansicht entlang einer Linie XVII-XVII in Fig. 1;
- Fig. 18: in einer Draufsicht eine weitere Trägervorrichtung, an welcher ein Gehäuse mit lediglich einer Kamera festgelegt ist;
- Fig. 19: in einer Draufsicht das an der Trägervorrichtung gemäß Fig. 18 gehaltene Gehäuse der Kamera;
- Fig. 20: in einer Perspektivansicht einen ersten Bolzen, welcher über eine seitliche Wandung des Gehäuses gemäß Fig. 19 übersteht;
- Fig. 21: in einer Perspektivansicht einen in eine Montagerichtung über eine frontseitige Wandung des Gehäuses gemäß Fig. 19 überstehenden dritten Bolzen;
- Fig. 22: in einer Perspektivansicht ein dem in Fig. 21 gezeigten dritten Bolzen zugeordnetes, an einer Grundplatte der Trägervorrichtung gemäß Fig. 18 angeordnetes Halteelement;
- Fig. 23: in einer Perspektivansicht den an dem Halteelement gemäß Fig. 22 festgelegten dritten Bolzen gemäß Fig. 21;
- Fig. 24: in einer Schnittansicht den an dem Halteelement festgelegten Bolzen gemäß Fig. 23, wobei zusätzlich eine den Bolzen mit einem in Richtung der Scheibe wirkenden Druck beaufschlagende Feder gezeigt ist;
- Fig. 25: den am korrespondierenden Halteelement festgelegten ersten Bolzen des Gehäuses der Kamera gemäß Fig. 19;
- Fig. 26: den im korrespondierenden Halteelement fixierten zweiten Bolzen des Gehäuses der Kamera gemäß Fig. 19;
- Fig. 27: in einer Schnittansicht den in dem korrespondierenden Halteelement aufgenommenen zweiten Bolzen;
- Fig. 28: in einer Schnittansicht entlang einer Linie XXVIII-XXVIII in Fig. 18 den in dem korrespondierenden Halteelement gehaltenen ersten Bolzen;
- Fig. 29: die Trägervorrichtung gemäß Fig. 18 in einer Draufsicht auf die der Scheibe zugewandte Seite;
- Fig. 30: ausschnittsweise eine Schnittansicht der Trägervorrichtung entlang einer Linie XXX-XXX in Fig. 18; und
- Fig. 31: ausschnittsweise und perspektivisch eine Streulichtblende vor deren endgültigem Verrasten mit einer einstückig mit der Grundplatte der Trägervorrichtung gemäß Fig. 18 ausgebildeten Haltelasche.

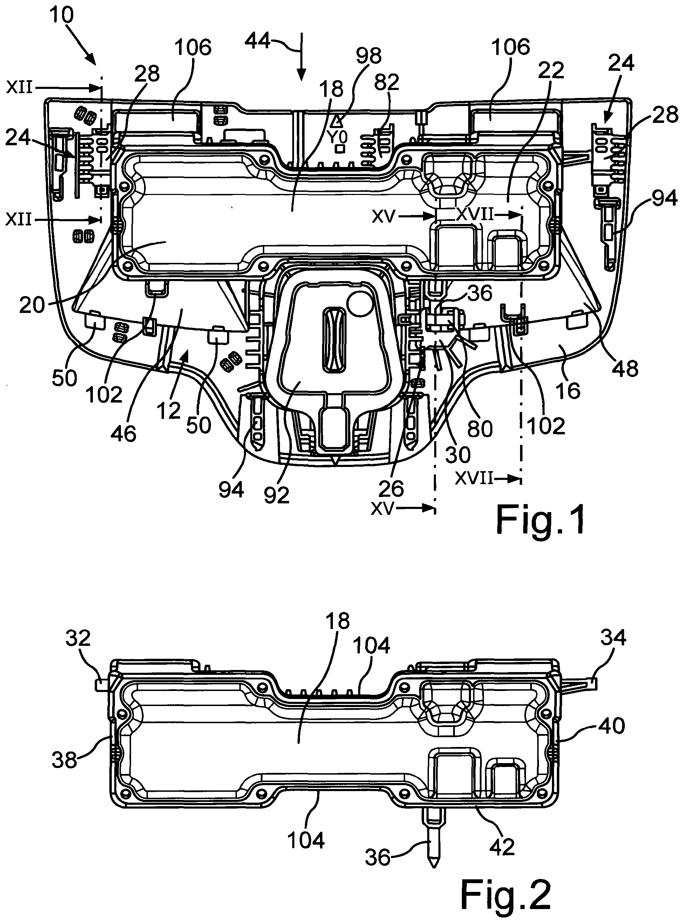

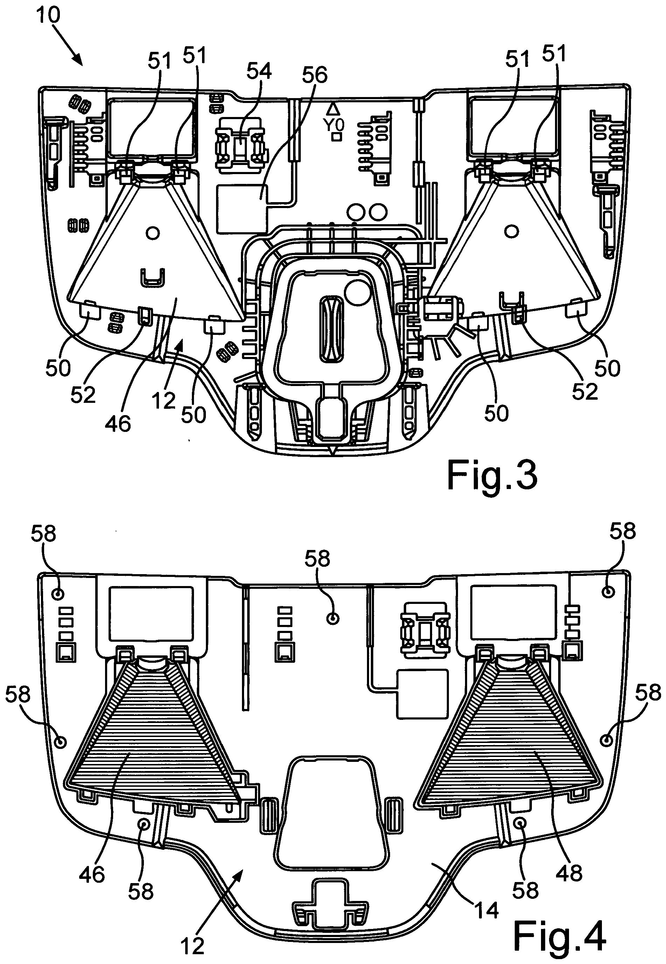

In Fig. 1 ist in einer Draufsicht eine Trägervorrichtung 10 gezeigt, welche an einer (nicht gezeigten) Scheibe, wie etwa einer Frontscheibe eines Kraftwagens, befestigt werden kann, um daran eine Kamera an der Scheibe zu platzieren. Die Trägervorrichtung 10 umfasst eine Grundplatte 12, von welcher in Fig. 4 eine der Scheibe zugewandte erste Seite 14 gezeigt ist. In Fig. 1 ist dem gegenüber eine der Scheibe abgewandte, zweite Seite 16 der Grundplatte 12 gezeigt.

An der Grundplatte 12 ist ein Gehäuse 18 gehalten, in welchem bei der in Fig. 1 gezeigten Variante zwei Kameras angeordnet sind. Eine erste Kamera befindet sich hierbei, bezogen auf Fig. 1, im linken Bereich 20 des Gehäuses 18 und eine zweite Kamera, ebenfalls bezogen auf Fig. 1, im rechten Bereich 22 des Gehäuses 18. Zum Befestigen des Gehäuses 18 an der Trägervorrichtung 10 sind Halteelemente 24, 26 vorgesehen, welche an jeweils unterschiedlichen Seiten eines für das Gehäuse 18 vorgesehenen Aufnahmebereichs der Trägervorrichtung 10 angeordnet sind. Zwei Halteelemente 24 sind an Seiten des Aufnahmebereichs angeordnet, welche in Bezug auf eine Platzierung der Trägervorrichtung 10 an der Scheibe des Kraftwagens parallel zu Längsseiten des Kraftwagens verlaufen. Diese beiden Halteelemente 24 umfassen jeweils gleichartig ausgebildete, einstückig mit der Grundplatte 12 ausgebildete Grundkörper 28. In analoger Weise umfasst das dritte Halteelement 26, welches in Bezug auf eine Platzierung der Trägervorrichtung 10 an der Scheibe des Kraftwagens an einer Frontseite des Aufnahmebereichs angeordnet ist, einen einstückig mit der Grundplatte 12 ausgebildeten Grundkörper 30.

An den Halteelementen 24, 26 sind jeweilige stabförmige Komponenten in Form von Bolzen 32, 34, 36 festgelegt, welche über jeweilige Wandungen 38, 40, 42 des Gehäuses 18 überstehen (vergleiche Fig. 2). In Bezug auf eine Platzierung der Trägervorrichtung 10 an der Scheibe des Kraftwagens weist ein in Fig. 1 angegebener Pfeil 44 in eine Vorwärtsfahrtrichtung des Kraftwagens. Entsprechend steht der in die Vorwärtsfahrtrichtung gesehen auf der linken Seite des Gehäuses 18 angeordnete erste Bolzen 32 über die linksseitige Wandung 38 über. Der zweite Bolzen 34 steht entsprechend über die rechtsseitige Wandung 40 über und der frontseitige dritte Bolzen 36 über die frontseitige Wandung 42.

Durch die Festlegung der drei Bolzen 32, 34, 36 an den korrespondierenden drei Halteelementen 24, 26, kann die Lage des Gehäuses 18 und somit der Kameras relativ zu der Grundplatte 12 und somit zu der Scheibe des Kraftwagens besonders gut und positionsgenau eingestellt werden. Ein Winkel von optischen Achsen der Kameras relativ zu der Scheibe ist so besonders genau vorgebbar und besonders gut reproduzierbar.

Jeder der beiden Kameras ist bei der Trägervorrichtung 10 gemäß Fig. 1 ein Blendenelement in Form einer Streulichtblende 46, 48 zugeordnet. Die jeweiligen Streulichtblenden 46, 48 sind bevorzugt über Haltelaschen 50, 51 im Zusammenwirken mit in der Grundplatte 12 vorgesehenen Vertiefungen 52 an der Grundplatte 12 durch Einklipsen oder Verrasten befestigt (vergleiche Fig. 3, Fig. 17, Fig. 30 und Fig. 31).

Die Streulichtblenden 46, 48 können mit einer Heizeinrichtung ausgestattet sein, etwa in Form von Heizdrähten. Beim Defekt der Heizung können somit die Streulichtblenden 46, 48 einfach ausgetauscht werden. In einem in Fig. 1 teilweise durch den linken Bereich 20 des Gehäuses 18 verdeckten Bereich der Trägervorrichtung 10 ist eine Halterung 54 vorgesehen (vergleiche Fig. 3), über welche eine Verteileinrichtung an der Trägervorrichtung 10 festgelegt werden kann. Die Verteileinrichtung, welche auch als Lötverteiler bezeichnet wird, dient der Versorgung der in die Streulichtblenden 46, 48 integrierten Heizdrähte mit elektrischer Energie, welche vom Fahrzeug zur Verfügung gestellt wird. Über eine Aussparung 56 in der Grundplatte 12 kann der Lötverteiler durchgesteckt und angelötet werden (vergleiche Fig. 3).

In Fig. 4 sind die Streulichtblenden 46, 48 von ihrer der Scheibe zugewandten Seite her zu sehen. Des Weiteren sind in Fig. 4 Abstandshalter 58 gezeigt, welche auf der der Scheibe zugewandten Seite 14 der Grundplatte 12 angeordnet sind. Durch Festlegen der Höhe der Abstandshalter 58 kann die in unterschiedlichen Baureihen des Kraftwagens unterschiedliche Scheibenneigung derart berücksichtigt werden, dass dennoch dieselbe Trägervorrichtung 10 in den unterschiedlichen Baureihen zum Einsatz kommen kann. So ist sichergestellt, dass trotz unterschiedlicher Neigung der Scheibe des Kraftwagens die Ausrichtung einer optischen Achse der jeweiligen Kamera bezogen auf eine horizontale Ebene und somit der Erfassungsbereich der Kamera in den unterschiedlichen Baureihen des Kraftwagens gleich ist.

Die Abstandshalter 58 können bei einer Anordnung der Trägervorrichtung 10 an der Scheibe, bei welcher die Grundplatte 12 parallel zur Scheibe verläuft, beispielsweise 1 mm hoch sein. Durch die Abstandshalter 58 ist auch dafür gesorgt, dass ein zum Befestigen der Trägervorrichtung 10 an der Scheibe dienender Klebstoff, bei welchem es sich beispielsweise um einen Polyurethan-Klebstoff handeln kann, eine gleichmäßige Dicke aufweist.

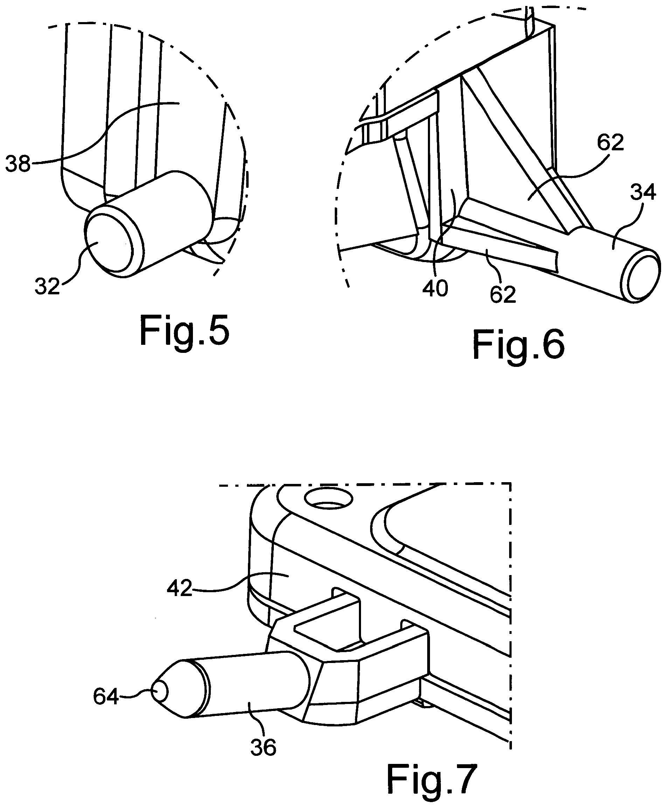

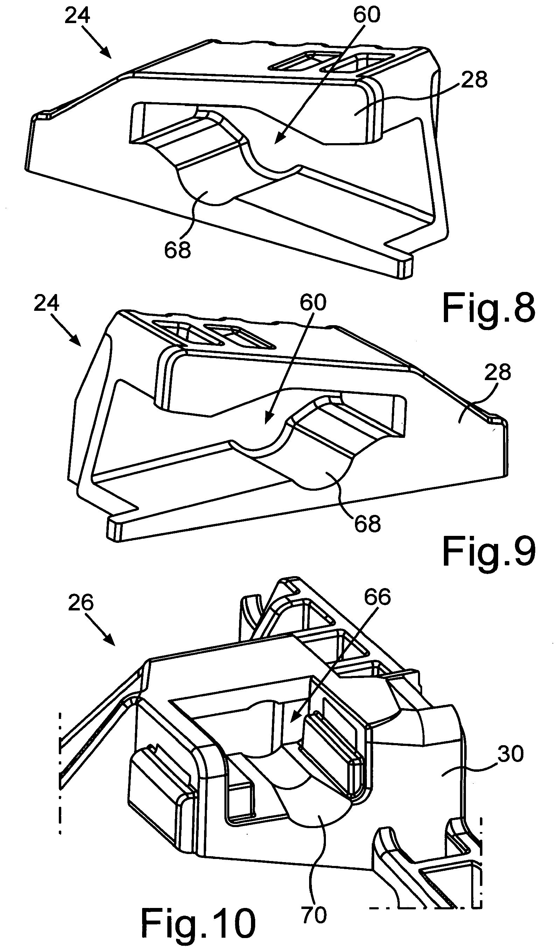

Fig. 5 zeigt den über die linke Wandung 38 des Gehäuses 18 überstehenden ersten Bolzen 32 in einer Perspektivansicht. Der erste Bolzen 32 ist im Querschnitt rund und hat eine glatte Oberfläche, so dass er besonders einfach in einen korrespondierenden Einführbereich 60 des zugehörigen Halteelements 24 eingeführt werden kann (vergleiche Fig. 9).

In analoger Weise zeigt Fig. 6 den zweiten Bolzen 34, welcher über die rechte Wandung 40 übersteht und welcher ebenfalls in einem Endbereich im Querschnitt rund ausgebildet ist. Der zweite Bolzen 34 ist etwas länger als der erste Bolzen 32, und an dem zweiten Bolzen 34 sind Stützrippen 62 vorgesehen, um ihm eine erhöhte Stabilität zu verleihen. Der runde Endbereich des Bolzens 34 kann aufgrund der glatten Oberfläche leicht in den entsprechenden Einführbereich 60 des zugeordneten Halteelements 24 eingeführt werden (vergleiche Fig. 8). Die Bolzen 32, 34, 36 können einen Durchmesser von beispielsweise etwa 5 mm haben. Eine Länge des ersten Bolzens 32 kann bei etwa 6,5 mm liegen.

Der über die frontseitige Wandung 42 des Gehäuses 18 überstehende dritte Bolzen 36 (vergleiche Fig. 7) läuft zu einer Spitze 64 hin konisch zu, so dass er leichter in einen entsprechenden Aufnahmebereich 66 des zugeordneten Halteelements 26 eingeführt werden kann (vergleiche Fig. 10). Der dritte Bolzen 36 kann eine Länge von etwa 18 mm haben.

In dem Einführbereich 60 der für den ersten Bolzen 32 und den zweiten Bolzen 34 vorgesehenen Halteelemente 24 sind jeweilige Rastmulden 68 vorgesehen, in welchen die Bolzen 32, 34 bereichsweise formschlüssig aufgenommen sind, wenn das Gehäuse 18 an der Trägervorrichtung 10 befestigt ist. Die Rastmulden 68 sind vorliegend im Längsschnitt halbkreisförmig.

Zum Befestigen des Gehäuses 18 an der Trägervorrichtung 10 wird das Gehäuse 18 parallel zur Grundplatte 12 in eine Montagerichtung montiert, wobei die Montagerichtung durch den Pfeil 44 in Fig. 1 angegeben ist. Entsprechend wird der vordere, dritte Bolzen 36 in die Montagerichtung in den Aufnahmebereich 66 hineingeschoben, welcher in dem dritten Halteelement 26 ausgebildet ist (vergleiche Fig. 10). Um das Einführen des dritten Bolzens 36 in das korrespondierende dritte Halteelement 26 zu erleichtern, ist in einem Basisbereich des Grundkörpers 30 des dritten Halteelements 26 eine Vertiefung 70 ausgebildet, welche sich vorliegend in einem in die Montagerichtung gesehen ersten Bereich aufweitet.

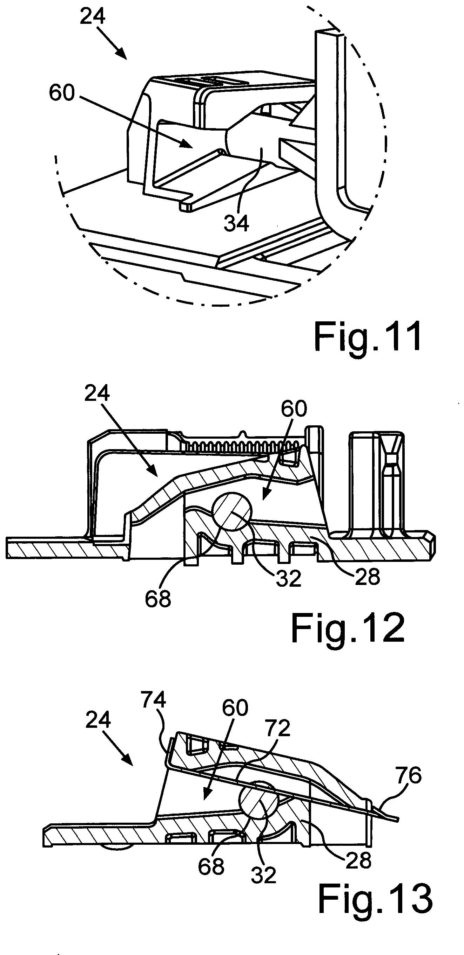

In Fig. 11 ist gezeigt, wie der zweite Bolzen 34 in die Montagerichtung in den Einführbereich 60 eingeführt und in der Rastmulde 68 des korrespondierenden Halteelements 24 aufgenommen ist.

Aus der Schnittansicht in Fig. 12 ist besonders gut erkennbar, wie der erste Bolzen 32 in der zugehörigen Rastmulde 68 aufgenommen ist, welche in dem Grundkörper 28 des entsprechenden Halteelements 24 ausgebildet ist.

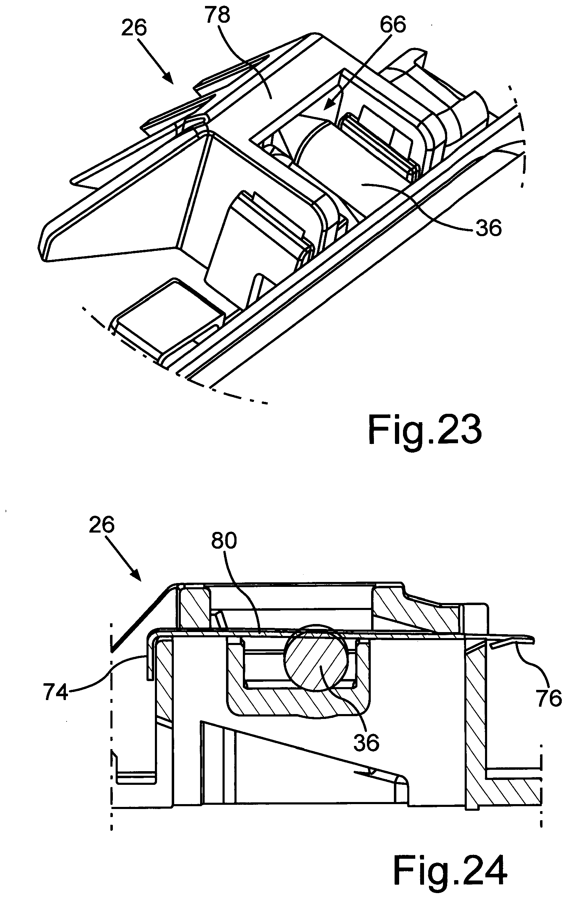

Aus Fig. 13 ist besonders gut ersichtlich, wie die in den Halteelementen 24 fixierten Bolzen 34, 32 jeweils mit einem in Richtung zur Grundplatte 12 hin wirkenden Druck beaufschlagt werden, wenn sie in den Rastmulden 68 aufgenommen sind. Hierfür ist nämlich an jedem Grundkörper 28 der beiden Halteelemente 24 eine - im unbelasteten Zustand - im Wesentlichen flache Feder 72 angebracht, welche den jeweiligen Bolzen 32, 34 mit dem Druck beaufschlagt. Die Federn 72 sind aus einem Metall gebildet und können beispielsweise etwa 30 mm lang und etwa 5 mm breit sein. Die Darstellung der Feder in Fig. 13 (wie auch in den Figuren 24, 27 und 28) ist lediglich schematisch zu verstehen, da die Feder im konkreten Wirkzusammenhang mit dem jeweiligen Bolzen 32, 34 gewölbt auf dem Bolzen aufliegt, da sie eine Kraft auf ihn in Richtung Grundplatte ausübt.

Ein abgewinkelter Schenkel 74 oder Rand der Feder 72, welcher mit dem Grundkörper 28 des Halteelements 24 in Anlage ist, kann beispielsweise eine Länge von 3 mm aufweisen. Die Feder 72 weist des Weiteren bevorzugt eine Verliersicherung in Form einer nach Art eines Hinterschnitts ausgebildeten Lasche 76 auf. Die Lasche 76 kann mit einem Bereich des Grundkörpers 28 in Anlage gebracht werden, welcher dem Schenkel 74 gegenüberliegt. Dann dient die Lasche 76 als Sicherungselement, welches einen Verbleib der Feder 72 im Einführbereich 60 des Halteelements 24 sicherstellt.

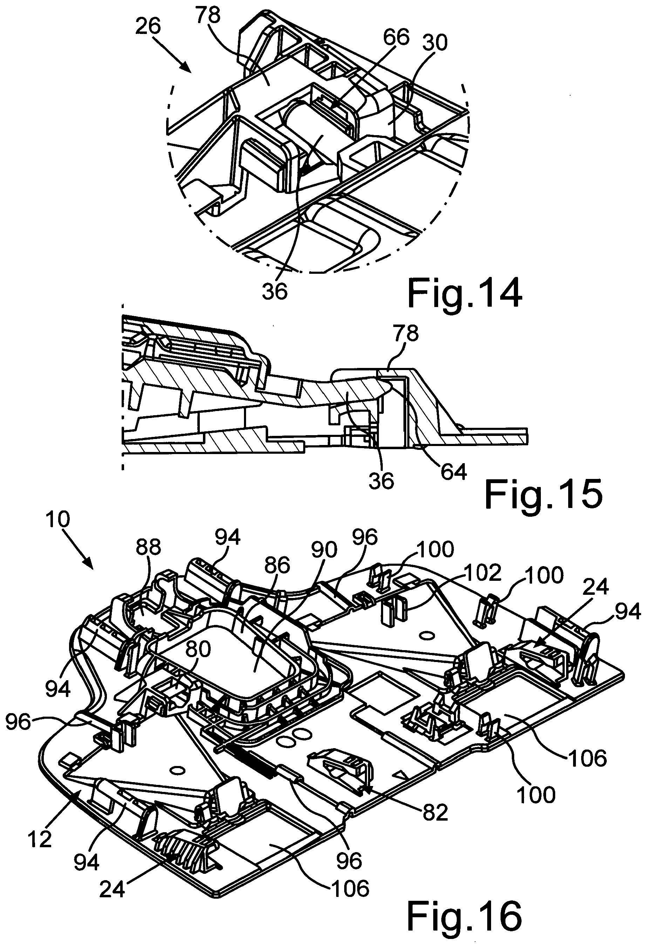

Aus Fig. 14 ist besonders gut ersichtlich, wie der von der Grundplatte 12 etwas schräg nach oben wegstehende dritte Bolzen 36 (vergleiche Fig. 7) in dem zugehörigen Aufnahmebereich 66 des dritten Halteelements 26 angeordnet ist. Hierfür ist in einem in die Einführrichtung hinteren Endbereich des Grundkörpers 30 ein Dach 78 ausgebildet, unter welchem sich die Spitze 64 des Bolzens 36 befindet (vergleiche Fig. 15). Durch die leicht schräge Ausrichtung des dritten Bolzens 36 ist sichergestellt, dass die Spitze 64 von unten gegen das Dach 78 drückt.

Des Weiteren beaufschlagt eine an dem Grundkörper 30 des dritten Halteelements 26 angeordnete Feder 80 den Bolzen 36 mit einem Druck, welcher zu der Scheibe des Kraftwagens hin wirkt (vergleiche Fig. 1 und Fig. 16). Die dem dritten Halteelement 26 zugeordnete Feder 80 ist bevorzugt von der Gestalt, den Dimensionen und dem Material her gleich ausgebildet, wie die den beiden anderen Halteelementen 24 zugeordneten Federn 72.

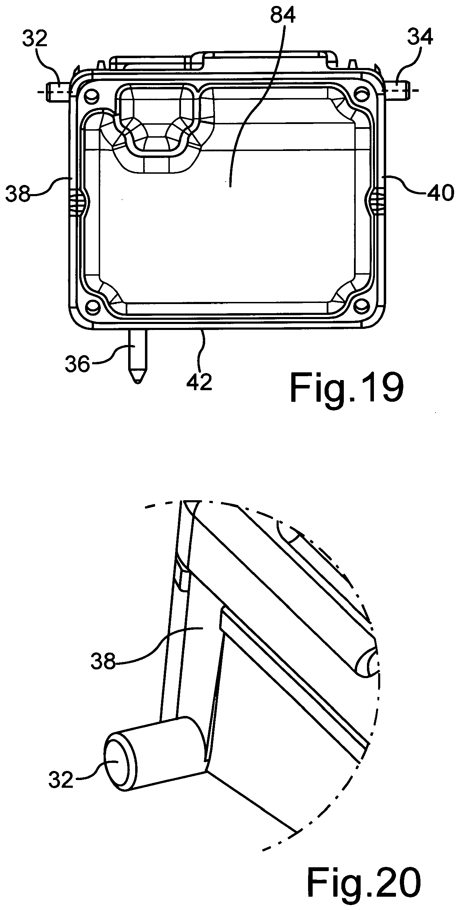

Aus der Perspektivansicht in Fig. 16 geht besonders gut die Anordnung der beiden seitlich des Aufnahmebereichs für das Gehäuse 18 vorgesehenen Halteelemente 24 und des dritten Halteelements 26 auf der Grundplatte 12 hervor. Aus Fig. 16 ist des Weiteren ersichtlich, dass zwischen diesen beiden seitlichen Halteelementen 24 ein weiteres Halteelement 82 angeordnet ist, welches dem in Fig. 16 rechten Halteelement 24 analog ausgebildet ist. Durch Nutzung der Halteelemente 24, 82, 26 kann auf der in Fig. 16 gezeigten Trägervorrichtung 10 ein Gehäuse 84 einer Kamera befestigt werden, welches lediglich eine Kamera enthält und daher als Monokamera ausgebildet ist (vergleiche Fig. 19). Auch hier sind dann die beiden Halteelemente 24, 82 an den Seiten des dem Gehäuse 84 zugeordneten Aufnahmebereichs angeordnet, welche parallel zur Längsseite des Kraftwagens verlaufen.

Insbesondere aus der Fig. 16 sind weitere Komponenten der Trägervorrichtung 10 ersichtlich. So ist ein Rahmen 86 einstückig mit der Grundplatte 12 ausgebildet, welcher der Befestigung eines Regen- und Lichtsensors dient. In die Vorwärtsfahrtrichtung gesehen vor diesem Rahmen 86 weist die Trägervorrichtung 10 eine Ausnehmung 88 auf, welche zur Anbringung eines dem Regen- und Lichtsensor zugeordneten Beschlagsensors vorgesehen ist. Falls die Trägervorrichtung 10 nicht mit dem Regen- und Lichtsensor bestückt ist, bleibt ein von dem Rahmen 86 eingefasster Bereich 90 (vergleiche Fig. 16) von einem Abdeck-Element in Form einer Blindkappe 92 verschlossen (vergleiche Fig. 1). Die Blindkappe 92 kann insbesondere derart ausgebildet sein, dass sie durch Herausbrechen aus der Trägervorrichtung 10 von der Grundplatte 12 lösbar ist.

An der Grundplatte 12 sind des Weiteren vier Befestigungsbolzen 94 angeordnet, welche bevorzugt einstückig mit der Grundplatte 12 ausgebildet sind. Die Befestigungsbolzen 94 dienen der Befestigung einer (nicht gezeigten) Abdeckkappe der Trägervorrichtung 10, mit welcher die Grundplatte 12 zum Fahrgastraum hin verkleidet ist. Entlang der Befestigungsbolzen 94 lässt sich die (nicht gezeigte) Abdeckkappe in die Fahrzeuglängsrichtung verschieben, so dass Einbautoleranzen der Scheibe und des Dachhimmels sowie Klebetoleranzen der Trägervorrichtung 10 relativ zur Scheibe ausgeglichen werden können. Hierbei kann vorgesehen sein, dass sich die Abdeckkappe ausgehend von einer Mittellage beispielsweise um 3 mm hin zur Fahrzeugfront oder hin zum Fahrzeugheck verschieben lässt.

In der Trägervorrichtung 10 sind des Weiteren eine Reihe von Dehnfugen 96 vorgesehen, welche dazu dienen, in Folge von Wärmeeinwirkung auftretende Spannungen abzubauen. Ein auf der Grundplatte 12 angeordneter Pfeil 98 (vergleiche Fig. 1) gibt die mit Y0 bezeichnete Mitte des Kraftwagens in Querrichtung an und erlaubt es, die Trägervorrichtung 10 bezogen auf diese Mitte korrekt an der Scheibe zu platzieren.

Insbesondere aus Fig. 16 ist gut ersichtlich, dass auf der Grundplatte 12 bevorzugt mehrere Kabelklipse 100 angeordnet sind, welche das Verlegen von Kabeln, etwa für die Stromversorgung des Regen- und Lichtsensors erleichtern. Vorliegend sind des Weiteren an den Streulichtblenden 46, 48 Anschläge 102 angeordnet, von denen einer bei an die Trägervorrichtung 10 montiertem Gehäuse 18 an der frontseitigen Wandung 42 des Gehäuses 18 anliegt (vergleiche Fig. 1). Wird das Gehäuse 84 der Monokamera an die Trägervorrichtung 10 montiert, so liegt der andere der beiden Anschläge 102 an diesem Gehäuse 84 frontseitig an. Die Anschläge 102 erleichtern so das Feststellen, ob das jeweilige Gehäuse 18, 84 im jeweiligen Aufnahmebereich seine Einbauposition erreicht hat, in welcher es von jeweils drei Halteelementen 24, 26, 82 gehalten ist.

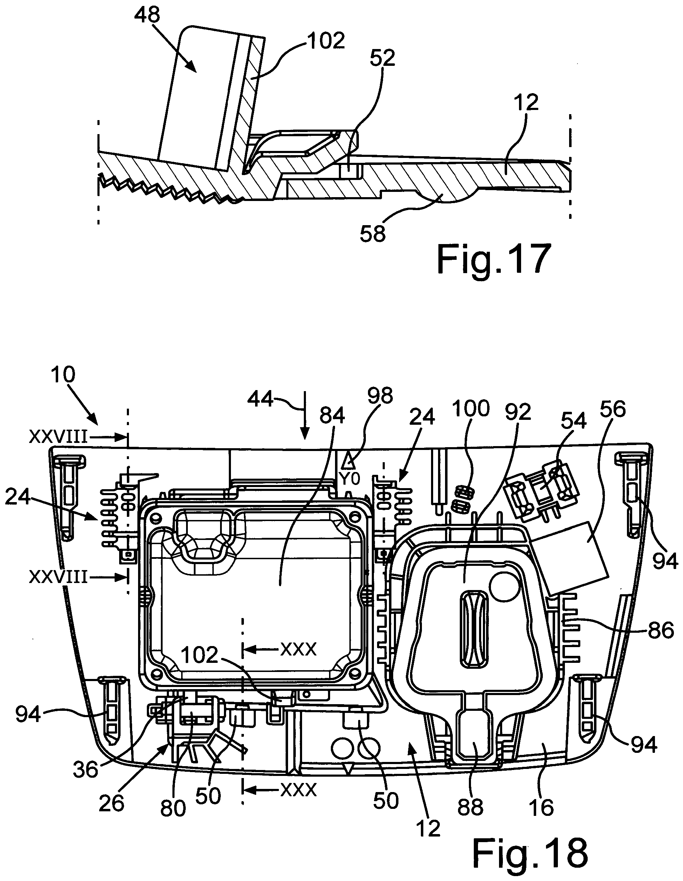

Anhand der Schnittansicht in Fig. 17 ist besonders gut erkennbar, wie die Streulichtblende 48 an der Grundplatte 12 der Trägervorrichtung 10 angeordnet ist.

Insbesondere aus Fig. 2 ist des Weiteren gut ersichtlich, dass das Gehäuse 18 Einschnitte 104 aufweisen kann, welche im Vergleich zu einer durchgängig rechteckigen Gestalt des Gehäuses 18 einen geringeren Bauraumbedarf des Gehäuses 18 mit sich bringen. So können aufgrund dieser Einschnitte 104 beispielsweise ein Innenrückspiegel und der Regen- und Lichtsensor leichter an der Trägervorrichtung 10 befestigt werden. Des Weiteren weist das Gehäuse 18 der Kamera bevorzugt Absätze auf, welche es ermöglichen, den Lötverteiler oder eine derartige Verteileinrichtung sowie das Halteelement 82 einfacher unterhalb des Gehäuses 18 unterzubringen.

In der Grundplatte 12 sind bevorzugt Aussparungen 106 vorgesehen, an welchen sich Kondenswasser sammeln kann (vergleiche Fig. 16). Dadurch wird ein Beschlagen einer Linse der jeweiligen Kamera verhindert, welche in dem Gehäuse 18, 84 untergebracht ist. In der Grundplatte 12 ist des Weiteren bevorzugt eine Überlaufrinne zum Aufnehmen von überschüssigem Klebstoff vorhanden.

Die in dem in Fig. 19 gezeigten Gehäuse 84 untergebrachte Kamera kann zwar auf der in Fig. 1 gezeigten Trägervorrichtung 10 angeordnet werden, jedoch zeigt Fig. 18 eine Trägervorrichtung 10, welche ebenfalls zum Festlegen des Gehäuses 84 verwendet werden kann. Auch hier sind bevorzugt die beiden Grundkörper 28 der an den parallel zu Längsseiten des Kraftwagens angeordneten Halteelemente 24, welche sich seitlich des für das Gehäuse 84 vorgesehenen Aufnahmebereichs befinden, einstückig mit der Grundplatte 12 ausgebildet.

In analoger Weise dient das dritte Halteelement 26 dem Festlegen des frontseitigen dritten Bolzens 36, welcher über die frontseitige Wandung 42 des Gehäuses 84 übersteht (vergleiche Fig. 19). Auch hier dient die in Fig. 18 gezeigte Feder 80 dazu, den dritten Bolzen 36 mit einem in Richtung zur Grundplatte 12 hin wirkenden Druck zu beaufschlagen.

Des Weiteren sorgen die an den Grundkörpern 28 der beiden anderen Halteelemente 24 vorgesehenen Federn 72 dafür, den ersten Bolzen 32 und den zweiten Bolzen 34 ebenfalls mit einem in diese Richtung wirkenden Druck zu beaufschlagen.

Fig. 19 zeigt das Gehäuse 84 mit den drei an jeweils unterschiedlichen Seiten desselben angeordneten und über die Wandungen 38, 40, 42 überstehenden Bolzen 32, 34, 36.

In Fig. 20 ist der erste Bolzen 32 in einer vergrößerten, perspektivischen Detailansicht gezeigt.

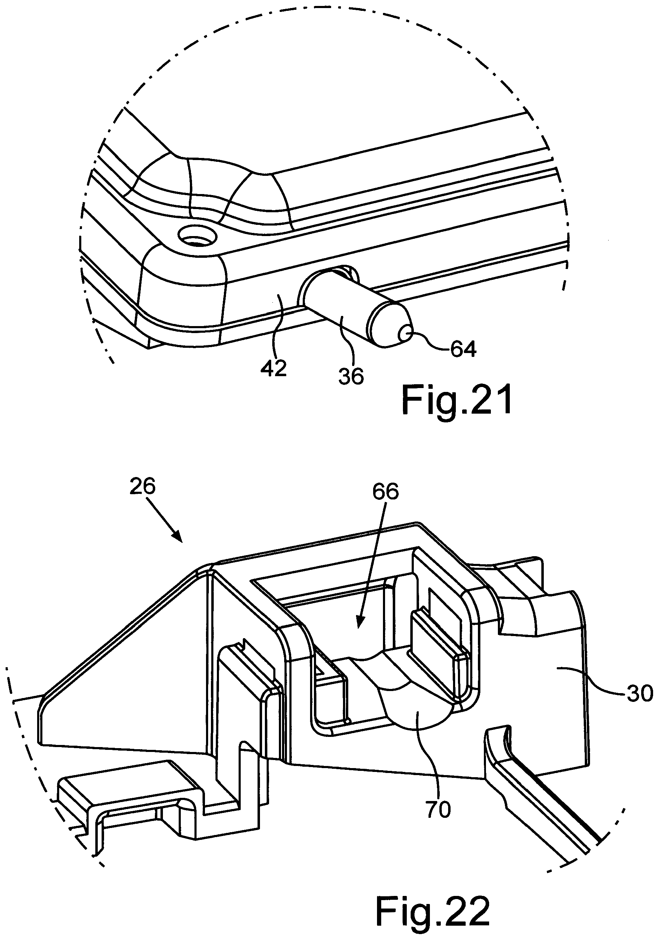

Fig. 21 zeigt perspektivisch den über die frontseitige Wandung 42 überstehenden dritten Bolzen 36, welcher die konisch zulaufende Spitze 64 aufweist.

In Fig. 22 ist perspektivisch der Grundkörper 30 des dem dritten Bolzen 36 zugeordneten dritten Halteelements 26 gezeigt. Auch hier ist in dem Basisbereich des Grundkörpers 30 die Vertiefung 70 vorgesehen, in welcher der dritte Bolzen 36 aufgenommen ist, wenn er in den Aufnahmebereich 66 eingeführt ist.

Fig. 23 zeigt den in den Aufnahmebereich 66 des dritten Halteelements 26 eingebrachten dritten Bolzen 36, wobei die Spitze 64 unterhalb des Dachs 78 angeordnet ist.

Aus der in Fig. 24 gezeigten Schnittansicht des dritten Halteelements 26 ist ersichtlich, wie die Feder 80 den dritten Bolzen 36 mit dem Druck beaufschlagt.

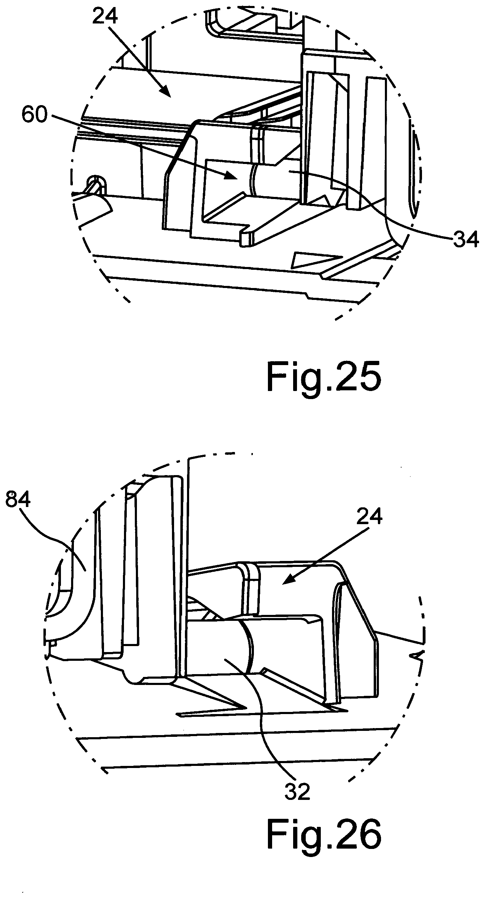

Die Fig. 25 zeigt perspektivisch den in den Einführbereich 60 des Halteelements 24 eingebrachten zweiten Bolzen 34 des Gehäuses 84.

In Fig. 26 ist der in dem zweiten der beiden gleichartig ausgebildeten Halteelemente 24 aufgenommene erste Bolzen 32 perspektivisch gezeigt.

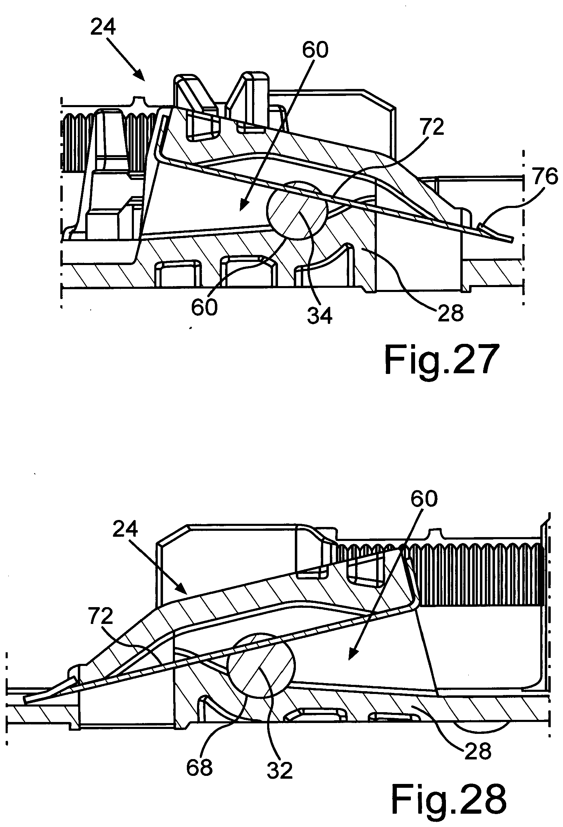

Aus der in Fig. 27 dargestellten Schnittansicht durch das dem zweiten Bolzen 34 zugeordnete zweite Halteelement 24 ist besonders gut die diesen zweiten Bolzen 34 mit dem Druck beaufschlagende Feder 72 ersichtlich.

In analoger Weise veranschaulicht die Schnittansicht in Fig. 28 das Beaufschlagen des ersten Bolzens 32 mit dem von der Feder 72 ausgeübten Druck.

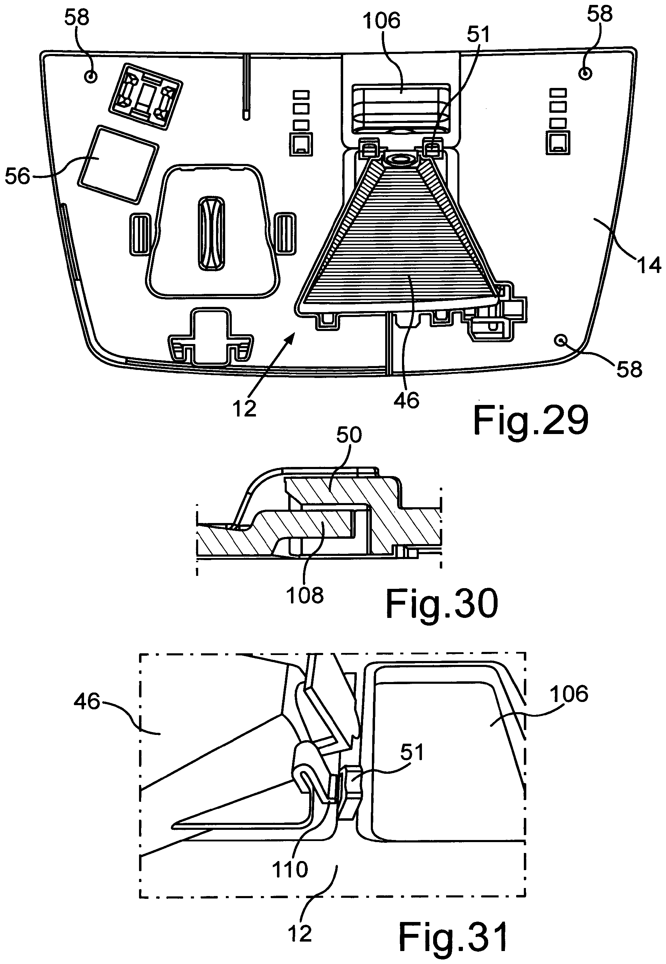

Aus der in Fig. 29 dargestellten Ansicht auf die der Scheibe zugewandte, erste Seite 14 der Grundplatte 12 ist ersichtlich, dass auch bei dieser Trägervorrichtung 10 Abstandshalter 58 vorgesehen sind. Des Weiteren ist die Streulichtblende 46 in die Grundplatte 12 eingeklipst gezeigt. Darüber hinaus sind in Fig. 29 die Aussparung 56 und die Aussparung 106 gut erkennbar.

Des Weiteren zeigt Fig. 30, wie ein Fortsatz 108 der Streulichtblende 46 im Bereich einer der in Richtung des Pfeils 44 vorderen Haltelaschen 50 für die lösbare Verbindung der Streulichtblende 46 mit der Grundplatte 12 sorgt. Der Fortsatz 108 wird hierbei in die Haltelasche 50 eingeführt.

Schließlich zeigt Fig. 31 ausschnittsweise und perspektivisch die Streulichtblende 46 vor deren Verrasten mit einer der beiden hinteren Haltelaschen 51, welche benachbart zu der in der Grundplatte 12 vorgesehenen Aussparung 106 angeordnet sind. Aus dieser Darstellung ist ersichtlich, dass ein an einem Grundkörper der Streulichtblende 46 angeordneter Rasthaken 110 mit der Haltelasche 51 in Eingriff gebracht werden kann, indem die Streulichtblende 46 hin zur Grundplatte 12 verschwenkt wird.

## Patentansprüche

1. Trägervorrichtung zum Befestigen an einer Scheibe eines Kraftwagens, mit einer an der Scheibe festlegbaren Grundplatte (12), auf welcher einer Traganordnung zum Halten eines Gehäuses (18, 84) wenigstens einer Kamera ausgebildet ist,
**dadurch gekennzeichnet, dass**
die Traganordnung zumindest ein Halteelement (24, 26, 82) umfasst, um eine an dem Gehäuse (18, 84) angeordnete und über eine Wandung (38, 40, 42) des Gehäuses (18, 84) überstehende stabförmige Komponente (32, 34, 36) direkt mit einem in Richtung zur Grundplatte (12) hin wirkenden Druck zu beaufschlagen, wobei ein im Grundkörper (28, 30) des zumindest einen Halteelements (24, 26, 82) angeordnetes Federelement (72, 80) mit einem abgewinkelten Schenkel (74) ausgebildet ist, der mit dem Grundkörper (28, 30) des Haltelements (24, 26, 82) in Anlage ist, und ein Sicherungselement (76) aufweist, welches einen Verbleib der Feder (72, 80) im Einführbereich (60, 66) des Halteelements (24, 26, 82) sicherstellt.

2. Trägervorrichtung nach Anspruch 1,
**dadurch gekennzeichnet, dass**
die Traganordnung drei Halteelemente (24, 26, 82) umfasst, welche an jeweils unterschiedlichen Seiten eines für das Gehäuse (18, 84) der Kamera vorgesehenen Aufnahmebereichs der Trägervorrichtung (10) angeordnet sind.

3. Trägervorrichtung nach Anspruch 2,
**dadurch gekennzeichnet, dass**
zwei der drei Halteelemente (24) an Seiten des Aufnahmebereichs angeordnet sind, welche in Bezug auf eine Platzierung der Trägervorrichtung (10) an der Scheibe des Kraftwagens zumindest im Wesentlichen parallel zu Längsseiten des Kraftwagens verlaufen.

4. Trägervorrichtung nach Anspruch 3,
**dadurch gekennzeichnet, dass**
die beiden Halteelemente (24) jeweils einen zu jeweiligen Rastmulden (68) für die jeweilige stabförmige Komponente (32, 34) führenden Einführbereich (60) aufweisen, durch welchen eine zumindest im Wesentlichen parallel zur Grundplatte (12) verlaufende Montagerichtung (44) für das Gehäuse (18, 84) der wenigstens einen Kamera vorgegeben ist.

5. Trägervorrichtung nach Anspruch 4,
**dadurch gekennzeichnet, dass**
die Montagerichtung (44), welche in Bezug auf eine Platzierung der Trägervorrichtung (10) an der Scheibe des Kraftwagens in eine Vorwärtsfahrtrichtung des Kraftwagens weist, wobei die Einführbereiche (60) der beiden Halteelemente (24) sich entgegen der Montagerichtung (44) U-förmig oder V-förmig öffnend ausgebildet sind.

6. Trägervorrichtung nach einem der Ansprüche 2 bis 5,
**dadurch gekennzeichnet, dass**
eines drittes der drei Halteelemente (26) an einer Seite des Aufnahmebereichs angeordnet ist, welche in Bezug auf eine Platzierung der Trägervorrichtung (10) an der Scheibe des Kraftwagens einer Fahrzeugfront näher ist als einem Fahrzeugheck.

7. Trägervorrichtung nach Anspruch 6,
**dadurch gekennzeichnet, dass**
eine Höhe des dritten Halteelements (26) und/oder eine Höhe wenigstens eines auf einer - in Einbauposition der Trägervorrichtung (10) der Scheibe des Kraftwagens zugewandten - Seite (14) der Grundplatte (12) angeordneten Abstandshalters (58) in Abhängigkeit von einer Neigung der Scheibe des Kraftwagens und einem Erfassungsbereich der wenigstens einen Kamera eingestellt ist.

8. Trägervorrichtung nach einem der Ansprüche 1 bis 7,
**dadurch gekennzeichnet, dass**
das wenigstens eine Federelement (72, 80) aus einem Metall gebildet ist.

9. Scheibe eines Kraftwagens, insbesondere Frontscheibe, an welcher eine Trägervorrichtung (10) nach einem der Ansprüche 1 bis 8 platziert ist, wobei mittels der Traganordnung der Trägervorrichtung (10) das Gehäuse (18, 84) der wenigstens einen Kamera derart befestigbar ist, dass mittels der wenigstens einen Kamera eine Umgebung des Kraftwagens zumindest bereichsweise erfassbar ist.

## Claims

1. Support device for attachment to a window of a motor vehicle, comprising a base plate (12) attachable to the window, on which base plate (12) a support arrangement for holding a housing (18, 84) of at least one camera is formed,
**characterised in that**
the support arrangement comprises at least one holding element (24, 26, 82) for directly applying a pressure acting in the direction towards the base plate (12) to a rod-shaped component (32, 34, 36) located on the housing (18, 84) and projecting beyond a wall (38, 40, 42) of the housing (18, 84), wherein a spring element (72, 80) located in the base body (28, 30) of the at least one holding element (24, 26, 82) is designed with an angled leg (74), which is in contact with the base body (28, 30) of the holding element (24, 26, 82) and which has a securing element (76), which ensures that the spring (72, 80) remains in the insertion region (60, 66) of the holding element (24, 26, 82).

2. Support device according to claim 1,
**characterised in that**
the support arrangement comprises three holding elements (24, 26, 82), each of which is located on different sides of a reception region of the support device (10) provided for the housing (18, 84) of the camera.

3. Support device according to claim 2,
**characterised in that**
two of the three holding elements (24) are located on sides of the reception region which, relating to a placing of the support device (10) on the window of the motor vehicle, extend at least substantially parallel to long sides of the motor vehicle.

4. Support device according to claim 3,
**characterised in that**
each of the two holding elements (24) has an insertion region (60), which leads to respective latching troughs (68) for the respective rod-shaped component (32, 34) and by which a mounting direction (44) extending at least substantially parallel to the base plate (12) is preset for the housing (18, 84) of the at least one camera.

5. Support device according to claim 4,
**characterised in that**
the mounting direction (44) points in a forward travelling direction relating to a placing of the support device (10) on the window of the motor vehicle, wherein the insertion regions (60) of the two holding elements (24) are designed to open up in a U- or V-shape against the mounting direction (44).

6. Support device according to any of claims 2 to 5,
**characterised in that**
a third of the three holding elements (26) is located on a side of the reception region which, relating to a placing of the support device (10) on the window of the motor vehicle, is closer to a vehicle front than to a vehicle rear.

7. Support device according to claim 6,
**characterised in that**
the height of the third holding element (26) and/or the height of at least one spacer (58) located on a side (14) of the base plate (12) which faces the window of the motor vehicle in the installed position of the support device (10) is/are set on the basis of an inclination of the window of the motor vehicle and a coverage region of the at least one camera.

8. Support device according to any of claims 1 to 7,
**characterised in that**
the at least one spring element (72, 80) is formed from a metal.

9. Window of a motor vehicle, in particular windscreen, on which a support device (10 according to any of claims 1 to 8 is placed, wherein the housing (18, 84) of the at least one camera can be attached in such a way by means of the support device (10) that at least a region of the surroundings of the motor vehicle can be covered by means of the at least one camera.

## Revendications

1. Dispositif de support destiné à fixer sur une vitre d'un véhicule automobile, comprenant une plaque de base (12) à fixer sur le disque, sur laquelle est conçu un système de support destiné à maintenir un boîtier (18, 84) d'au moins une caméra, **caractérisé en ce que**
le système de support comprend au moins un élément de retenue (24, 26, 82) pour soumettre un composant (32, 34, 36) en forme de tige disposé sur le boîtier (18, 84) et faisant saillie par rapport une paroi (38, 40, 42) du boîtier directement à une pression agissant dans la direction vers la plaque de base (12), un élément de ressort (72, 80) disposé dans le corps de base (28, 30) de l'au moins un élément de retenue (24, 26, 82) se présente avec une branche coudée (74) qui est en butée avec le corps de base (28, 30) de l'élément de retenue (24, 26, 82) et comporte un élément de fixation (76) qui immobilise le ressort (72, 80) dans la zone d'insertion (60, 66) de l'élément de retenue (24, 26, 82).

2. Dispositif de support selon la revendication 1, **caractérisé en ce que** le système de support comprend trois éléments de retenue (24, 26, 82) qui sont disposés sur chacun des côtés différents d'une zone de réception du dispositif de support, prévue pour le boîtier (18, 84) de la caméra.

3. Dispositif de support selon la revendication 2, **caractérisé en ce que** deux des trois éléments de retenue (24) sont disposés sur les côtés de la zone de réception, qui par rapport à un placement du dispositif de support (10) sur la vitre du véhicule automobile au moins sensiblement sont parallèles aux côtés longitudinaux du véhicule automobile.

4. Dispositif de support selon la revendication 3, **caractérisé en ce que** les deux éléments de retenue (24) présentent chacun une zone d'insertion (60) amenant à des creux d'encliquetage (68) respectifs pour le composant concerné en forme de tige (32, 34) par lesquels une direction de montage (44) s'étendant au moins sensiblement parallèle à la plaque de base (12) est prédéfinie pour le boîtier (18, 84) de l'au moins une caméra.

5. Dispositif de support selon la revendication 4, **caractérisé en ce que** la direction de montage (44) indique par rapport à un placement du dispositif de support (10) sur la vitre du véhicule automobile dans une direction de marche en avant, les zones d'insertion (60) des deux éléments de retenue (24) à l'opposé de la direction de montage (44) sont conçus en forme de U ou en forme de V ouvert.

6. Dispositif de support selon l'une quelconque des revendications 2 à 5, **caractérisé en ce qu'**un troisième des trois éléments de retenue (26) est disposé sur un côté de la zone de réception, qui par rapport à un placement du dispositif de support (10) sur la vitre du véhicule automobile est plus proche de l'avant du véhicule que de l'arrière du véhicule.

7. Dispositif de support selon la revendication 6, **caractérisé en ce qu'**une hauteur du troisième élément de retenue (26) et/ou une hauteur d'au moins un écarteur (58) disposé sur un côté (14) de la plaque de base (12) orienté dans la position de montage du dispositif de support (10) de la vitre du véhicule automobile, est réglée en fonction d'une inclinaison de la vitre de véhicule automobile et d'une zone de détection de l'au moins une caméra.

8. Dispositif de support selon l'une quelconque des revendications 1 à 7, **caractérisé en ce que** l'au moins un élément de ressort (72, 80) est fabriqué en métal.

9. Vitre d'un véhicule automobile, en particulier pare-brise, sur lequel est placé un dispositif de support (10) selon l'une quelconque des revendications 1 à 8, au moyen du système de support du dispositif de support (10) le boîtier de l'au moins une caméra pouvant être fixé de telle sorte qu'au moyen de l'au moins une caméra un environnement du véhicule automobile peut être détecté au moins à certains endroits.
